(19) Europäisches Patentamt
European Patent Office
Office européen des brevets

(11) Numéro de publication: **0 246 983 B1**

(12) # FASCICULE DE BREVET EUROPEEN

(45) Date de publication de fascicule du brevet: **25.09.91**

(51) Int. Cl.5: **C08G 77/18**, C08G 77/08, C08L 83/04

(21) Numéro de dépôt: **87420109.8**

(22) Date de dépôt: **23.04.87**

(54) **Procédé de préparation de diorganopolysiloxanes à groupements teminaux alcoxy.**

(30) Priorité: **28.04.86 FR 8606365**

(43) Date de publication de la demande:
**25.11.87 Bulletin 87/48**

(45) Mention de la délivrance du brevet:
**25.09.91 Bulletin 91/39**

(84) Etats contractants désignés:
**AT BE CH DE ES FR GB GR IT LI LU NL SE**

(56) Documents cités:
**EP-A- 98 369**
**FR-A- 2 550 540**
**GB-A- 1 281 343**
**US-A- 4 371 682**

(73) Titulaire: **RHONE-POULENC CHIMIE**
**25, quai Paul Doumer**
**F-92408 Courbevoie Cédex(FR)**

(72) Inventeur: **Letoffe, Michel**
**5, avenue de Limburg**
**F-69110 Sainte-Foy-Les-Lyon(FR)**
Inventeur: **Peccoux, Pierre-Michel**
**71, rue Henri Gorjus**
**F-69004 Lyon(FR)**

(74) Mandataire: **Seugnet, Jean Louis et al**
**RHONE-POULENC INTERSERVICES Service Brevets Chimie Centre de Recherches de Saint-Fons B.P. 62**
**F-69192 Saint-Fons Cédex(FR)**

**EP 0 246 983 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de préparation de diorganopolysiloxanes à groupements terminaux alcoxy dénommés ci-dessous PF : polymères fonctionnalisés et leur utilisation notamment comme l'un des constituants essentiels de compositions élastomères organopolysiloxanes monocomposantes stables au stockage en absence d'humidité et réticulant à l'humidité atmosphérique à température ambiante dénommées par la suite compositions élastomères vulcanisables à froid (EVF).

On connaît déjà de nombreux procédés de préparation de diorganopolysiloxanes à terminaisons alcoxy.

On peut notamment citer les procédés décrits dans les brevets US-A-3 122 522, US-A-3 161 614 et le brevet US redélivré RE-A-2 970. Les procédés décrits dans ces brevets ne sont pas utilisés industriellement à l'heure actuelle car ils sont trop coûteux ou conduisent à des PF de mauvaise qualité pour leur utilisation essentielle comme polymère de base pour les compositions EVF.

Un progrès important a été apporté par le brevet US-A-3 542 901 décrivant un procédé de PF par réaction d'un polymère alpha-omégadihydroxydiorganopolysiloxane, autrement dit un diorganopolysiloxane à terminaisons silanol sur un polyalcoxysilane en présence d'un catalyseur de fonctionnalisation à fonction amine.

Ce procédé est certes efficace mais il est très difficile d'éliminer correctement l'amine qui peut avoir un effet néfaste sur la stabilité au stockage de la composition EVF en présence du catalyseur de condensation qui est un composé d'un métal généralement l'étain.

D'autres catalyseurs peuvent être utilisés comme par exemple un dérivé organique du titane (brevet US-A-4 111 890) ; un chelate d'alcoxyaluminium (brevet britannique GB-A-2 144 758) et une hydroxylamine N-N disubstituée (brevet français FR-A-2 508 467). Ces catalyseurs peuvent présenter l'inconvénient d'être peu efficaces ou d'avoir une influence néfaste sur la stabilité au stockage des compositions EVF.

Un autre procédé pour faire des PF consiste à utiliser des silanes mixtes présentant en plus des groupements alcoxy, un groupe hydrolysable tel qu'un groupe amido, amino, carbamate, oxime, etc ....., éventuellement en présence d'un catalyseur de fonctionnalisation connu et d'un polyalcoxysilane.

Des procédés de ce type sont décrits notamment dans les brevets US-A-3 697 568, US-A-3 896 079, EP-A-69 256 et US-A-4 371 682.

Ces procédés sont efficaces mais nécessitent l'utilisation de silanes mixtes coûteux. Par ailleurs les produits organiques issus des groupes hydrolysables après réaction peuvent avoir un effet néfaste sur la composition EVF (voir à ce sujet les pages 4 et 5 du brevet français FR-A-2 543 562).

EP-A-98 369 décrit l'utilisation d'oxime comme réactif lors de la réaction d'un halogénosilane sur un alcohol en vue de préparer un polyalcoxysilane ou un poly(alcoxy)(cétiminoxy)silane.

La présente invention a précisément pour but de proposer un catalyseur de fonctionnalisation bon marché, efficace et qui ne présente pas d'effets secondaires néfastes dans les compositions EVF, même dans le cas où il n'a pas été séparé ou éliminé préalablement des PF obtenus à l'aide d'un tel catalyseur.

Ce but et d'autres sont atteints par la présente invention qui concerne en effet un procédé de préparation de diorganopolysiloxane à groupements terminaux polyalcoxy de formule :

$$(R^2)_{3-a}-\overset{(R^1)_a}{\underset{}{Si}}O-(-\overset{R}{\underset{R}{Si}}O)_n-\overset{(R^1)_a}{Si}-(R^2)_{3-a} \qquad (1)$$

caractérisé en ce q'on fait réagir au moins un diorganopolysiloxane de formule :

$$HO-(-\overset{R}{\underset{R}{Si}}O)_nH \qquad (2)$$

sur au moins un polyalcoxysilane de formule :

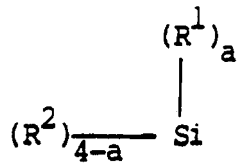

(3)

en présence d'une quantité catalytiquement efficace d'au moins un composé organique exempt de silicium et présentant une fonction oxime, formules dans lesquelles les radicaux R identiques ou différents représentent des radicaux monovalents hydrocarbonés ayant de 1 à 10 atomes de carbone, éventuellement substitués ou non par des atomes d'halogènes ou des groupes cyano ; $R^1$ représentent des radicaux monovalents hydrocarbonés en $C_1$-$C_{10}$ ; $R^2$ représentent des radicaux alcoxy ou polyalcoxy de formules : TO, TOZO, dans lesquelles T représente un radical alkyle en $C_1$-$C_4$, Z représente un radical alkylène linéaire ou ramifié en $C_2$-$C_4$, a est 0 ou 1 et n est un nombre entier ayant une valeur suffisante pour conférer au polymère de formules (1) et (2) une viscosité de 700 à 1 000 000 mPa.s à 25 °C ; n a donc une valeur approximativement comprise entre 50 et 2 500.

Un composé organique exempt de silicium et présentant une fonction oxime qui peut être utilisée répond à la formule :

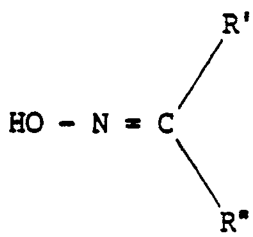

(4)

dans laquelle R′ représente un radical hydrocarboné monovalent en $C_1$-$C_{15}$ ; R″ représente un atome d'hydrogène ou un radical hydrocarboné monovalent en $C_1$-$C_{15}$ ; R′ et R″ peuvent représenter ensemble un radical carbocyclique divalent alkylène ayant de 3 à 6 atomes de carbone dans le cycle.

Comme exemples de radicaux hydrocarbonés monovalents R′ et R″ en $C_1$-$C_{15}$ on peut citer les radicaux alkyle et alcényle tels que les radicaux méthyle, éthyle, propyle, butyle, pentyle, hexyle, vinyle, butényle, de radicaux R′ et R″ cycliques hydrocarbonés saturés ou insaturés ayant de préférence 5 à 8 atomes de carbone dans le cycle on peut citer les radicaux cycloalkyle tels que cyclopentyle, cyclohexyle, cycloheptyle, cyclooctyle, méthyle-3 cyclohexyle-1, cyclopentényle, cyclohexényle, les radicaux phényle, alkylphényle tels que tolyle et xylyle, et les radicaux phénylalkyle tel que le radical benzyle.

Comme exemples de radicaux carbocycliques formés ensemble par R′ et R″ on peut citer les radicaux cycliques cités ci-dessus.

Comme autres exemples d'oximes utilisables on peut citer :

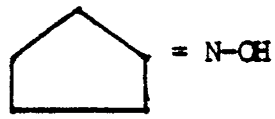

cyclopentanone-oxime

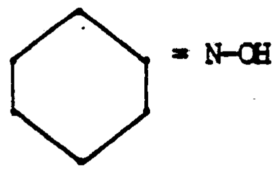

cyclohexanone-oxime

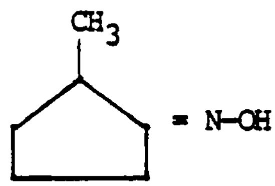

méthyl-2 cyclopentanone-1 oxime

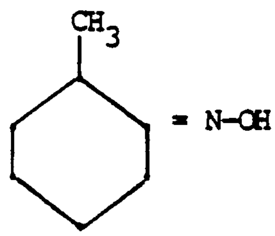

méthyl-2 cyclohexanone-1 oxime

$(C_6H_5)_2\ C = N\text{-}OH$

benzophénone-oxime

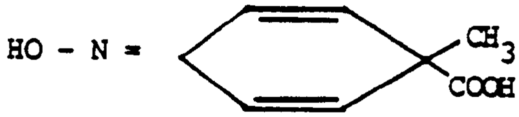

acide(hydroxyimino)-4 cyclohexadiène-2,5 méthyl-1 carboxylique-1

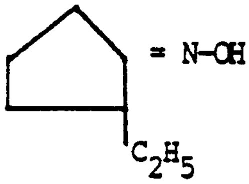

éthyl-2 cyclopentanone-1 oxime

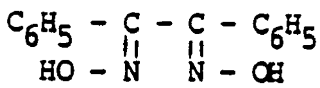

benzyle-dioxime

$C_6H_5 - CH = CH - CN = N - OH$ cinnamaldéhyde-oxime

$CH_3 - CH = N - OH$ acétaldéhyde-oxime

$(CH_3)_2\ C = N - OH$ acétone-oxime

$C_6H_5 - CH = N - OH$ benzaldéhyde-oxime

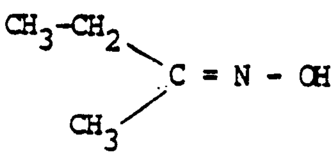

éthylméthylcétone-oxime

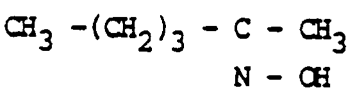

hexanone-2 oxime

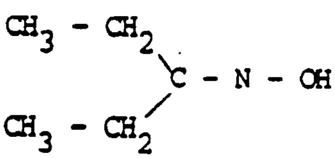

di-éthylcétone-oxime

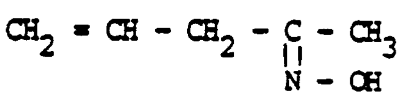

pentène-4 one-2 oxime

De façon générale, l'oxime a un poids moléculaire inférieur à 800 et est constitué d'atome choisi parmi C, H, N, O, et F.

Les polymères alpha, oméga-di(hydroxy)diorganopolysiloxanes de formule (2) de viscosité 700 à 1 000

000 mPa.s à 25 °C, de préférence 1 000 à 700 000 mPa.s à 25 °C, sont des polymères linéaires, constitués essentiellement de motifs diorganosiloxy de formule précitée $R_2SiO$, et bloqués à chaque extrémité de leur chaîne par un groupe hydroxyle ; toutefois, la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 10 atomes de C, substitués ou non par des atomes d'halogènes ou des groupes cyano, représentés par les symboles R, englobent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décycle, trifluoro-3,3,3 propyle, trifluoro-4,4,4 butyle, pentafluoro-4,4,4,3,3 butyle. .
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.
- les radicaux cyanoalkyles dont les chaînons alkyles ont de 2 à 3 atomes de carbone tels que les radicaux β-cyanoéthyle et γ-cyanopropyle.
- les radicaux méthyle, phényle, vinyle et trifluoro-3,3,3 propyle sont les radicaux préférés.

A titre d'exemples concrets de motifs représentés par la formule $R_2SiO$ on peut citer ceux de formules :

$(CH_3)_2SiO$,
$CH_3(CH_2=CH)SiO$
$CH_3(C_6H_5)SiO$
$(C_6H_5)_2SiO$,
$CF_3CH_2CH_2(CH_3)SiO$
$NC-CH_2CH_2(CH_3)SiO$
$NC-CH(CH_3)CH_2(CH_2=CH)SiO$
$NC-CH_2CH_2CH_2(C_6H_5)SiO$

Il doit être compris que l'on peut utiliser comme polymère de formule (2) un mélange constitué de polymères alpha, oméga-di(hydroxy)-diorganopolysiloxanes qui diffèrent entre eux par le poids moléculaire et/ou la nature des groupements liés aux atomes de silicium.

Ces polymères alpha, oméga-di(hydroxy)diorganopolysiloxanes sont commercialisés ; en outre, ils peuvent être aisément fabriqués selon des techniques maintenant bien connues.

Dans la formule (3) du polyalcoxysilane, les radicaux $R^2$ identiques ou différents représentent des radicaux alcoxy de formule TO, TOZO dans lesquelles T représente un radical alkyle linéaire ou ramifié en $C_1$-$C_4$ et Z représente un radical alkylène en $C_2$-$C_4$. $R^1$ peut avoir la même signification que R des motifs $R_2SiO$ ainsi l'illustration donnée ci-dessus pour R convient également pour $R^1$. Des exemples de symbole T sont les radicaux méthyle, éthyle, propyle et butyle.

Des exemples de radicaux Z sont :

$-(CH_2)_2-$, $-CH(CH_3)CH_2-$ , $-CH(CH_3)CH_2CH_2-$, $-CH(CH_3)-CH(CH_3)$ ;

A titre d'exemples concrets des polyalcoxysilanes de formule (3) peuvent être cités ceux de formules :

$Si(OCH_3)_4$
$Si(OCH_2CH_3)_4$
$Si(OCH_2CH_2CH_3)_4$
$CH_3Si(OCH_3)_3$
$CH_3Si(OCH_2CH_2OCH_3)_3$
$Si(OCH_2CH_2OCH_3)_4$
$CH_2=CHSi(OCH_2CH_2OCH_3)_3$
$C_6H_5Si(OCH_3)_3$
$C_6H_5Si(OCH_2CH_2OCH_3)_3$
$Si(OCH_3)_2[OCH(CH_3)CH_2OCH_3]_2$
$CH_2=CHSi(OCH_3)_3$

$CH_2 = CH\text{-}CH_2Si(OCH_3)_3$
$CH_2 = C(CH_3)CH_2Si(OCH_3)_3$
$CH_2 = CH\text{-}Si(OCH_3)_2[OCH(CH_3)CH_2OCH_3]$

On utilise généralement, pour 100 parties en poids du polymère de formule (2), de 0,1 à 20 parties en poids de polyalcoxysilane de formule (3).

Le procédé selon l'invention conduit à une fonctionnalisation rapide et complète des huiles. Le catalyseur oxime peut ne pas être éliminé des PF après fonctionnalisation. En effet de façon surprenante et inattendue on a constaté que dans ce cas les compositions EVF préparées à partir de ces PF contenant en outre un agent de condensation qui est un composé métallique généralement de l'étain, une charge et éventuellement d'autres additifs usuels, présentent une stabilité tout à fait remarquable au stockage. Par ailleurs l'invention a permis de mettre en évidence que l'oxime résiduel n'avait pas d'effet néfaste sur les réactions de condensation à l'humidité de l'air des PF.

Par quantité efficace de catalyseur de formule (4) on entend par exemple de 0,05 à 10, de préférence de 0,2 à 5 moles d'oxime par mole de silanol.

La réaction de fonctionnalisation peut être effectuée entre 20 et 200 °C, de préférence entre 40 et 120 °C.

Le temps de réaction est d'autant plus court que la température est élevée. Elle est comprise entre 1 et 4 heures à 80 °C et peut être de 6 à 15 heures à température ambiante. La réaction est effectuée à l'abri de l'humidité ou dans des conditions substantiellement anhydres. Cette réaction peut être par exemple effectuée dans un réacteur fermé anhydre qui a été soumis à un vide pour en chasser l'air, cet air ayant été remplacé par un gaz anhydre tel que l'azote.

A la fin de la réaction de fonctionnalisation les produits volatils tels que le polyalcoxysilane n'ayant pas réagi, l'alcool formé, l'oxime peuvent être chassés du PF si on le désire, par exemple par chauffage sous pression réduite, bien que, comme indiqué ci-dessus cette opération ne soit pas nécessaire si on utilise le PF obtenu pour réaliser une composition EVF monocomposante.

Le fait de pouvoir conserver l'oxime du PF est un avantage très important, en particulier dans le cas où l'on utilise une oxime non volatile. Ceci permet également d'éviter l'étape de dévolatilisation par chauffage sous pression réduite des PF.

La présente invention concerne également un procédé de préparation de composition EVF, stable au stockage en absence d'humidité et réticulant en présence d'humidité de l'air, caractérisé en ce qu'on mélange :

- 100 parties de PF de formule (1) obtenu par la mise en oeuvre du procédé de condensation,
- une quantité efficace d'un catalyseur de condensation,
- de 0 à 250 parties de charges minérales.
- de 0 à 20 parties, de préférence 1 à 10 parties, d'un polyalcoxysilane de formule (3) ci-dessus.

Par quantité efficace de catalyseur de condensation, on entend par exemple de 0,001 à 1 partie en poids d'au moins un composé d'un métal choisi généralement parmi l'étain, le titane et le zirconium et leurs mélanges.

Comme catalyseur de condensation on peut utiliser les monocarboxylates et les dicarboxylates d'étain tels que l'éthyl-2 hexanoate d'étain, le dilaurate de dibutylétain, le diacétate de dibutylétain (voir le livre de NOLL "Chemistry and technology of silicone", page 337, Academic Press, 1968 - 2ème édition).

Les chelates d'étain de valence IV hexacoordinés tels que ceux décrits dans la demande de brevet européen EP-A-147 323 et le brevet US-A-4 517 337 cités comme référence sont particulièrement appropriés.

Sont également préférés, les catalyseurs de condensation qui sont un mélange d'un bis($\beta$-dicétonate) de diorganoétain avec un dérivé organique de l'étain également de valence IV, mais exempt de fonction $\beta$-dicétonato, et possèdant au moins au atome d'étain, chaque atome d'étain portant deux radicaux organiques liés par une liaison Sn-C, les deux autres valences étant satisfaites au moyen de radicaux choisis parmi les radicaux organiques ou inorganiques liés par une liaison SnO, SnS, par des atomes d'halogènes, par des groupes hydroxy et par des atomes d'oxygène.

Ces dérivés organiques de l'étain de valence IV exempts de fonction $\beta$-dicétonato peuvent être en particulier des sels d'étain répondant aux formules :

$A_2SnR^6_2$
$R^6_2\ SnO$,
$AR^6_2\ SnOSnR^6_2\ A$

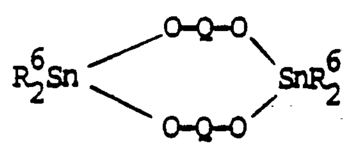

dans lesquelles :

- $R^6$ représente un radical hydrocarboné, halogéné ou non, en $C_1$-$C_{20}$,
- A représente un radical organique ou inorganique, lié à l'atome d'étain par une liaison Sn-O ou Sn-S, un atome d'halogène,

Q représente un radical alkylène en $C_2$-$C_{10}$, A peut être choisi dans le groupe constitué :

(i) des radicaux mono-carboxylates de formule $R^7COO$, $R^7$ étant un radical hydrocarboné, halogéné ou non, en $C_1$-$C_{20}$,

(2i) des radicaux dicarboxylates de formule

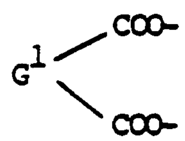

liés à un même atome d'étain ou à deux atomes d'étain conduisant aux deux formules :

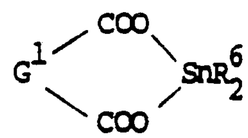

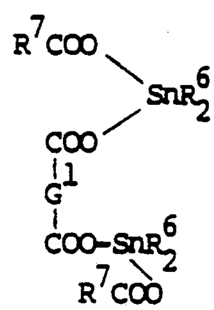

dans lesquelles $G^1$ représente un radical hydrocarboné divalent en $C_1$-$C_{15}$ et $R^7$ a la signification donnée sous (i),

(3i) des radicaux dicarboxylates de formule $R^7OCOG^1COO$ dans laquelle $R^7$ et $G^1$ ont la signification donnée respectivement sous (i) et (2i).

Les sels d'étain ci-dessus sont bien connus et sont décrits en particulier dans l'ouvrage de NOLL précité, les brevets US-A-3 186 963, 3 862 919, le brevet belge 842 305 et le brevet britannique GB-A-1 289 900 cités comme référence.

Les charges minérales sont utilisées à raison de 0 à 250 parties, de préférence de 5 à 200 parties pour 100 parties de PF de formule (1).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français FR-A-1 126 884, FR-A-1 136 885, FR-A-1 236 505 ; brevet anglais GB-A-1 024 234). Les charges traitées renferment, dans la plupart des cas, de 3 à 30 % de leur poids de composés organosiliciques.

Les charges peuvent être constituées d'un mélange de plusieurs types de charges de granulométrie différente ; ainsi par exemple, elles peuvent être constituées de 30 à 70 % de silices finement divisées de surface spécifique BET supérieure à 40 $m^2/g$ et de 70 à 30 % de silices plus grossièrement divisées de surface spécifique inférieure à 30 $m^2/g$.

Les compositions selon l'invention peuvent éventuellement contenir en outre pour améliorer notamment l'adhérence des EVF de 0 à 20 parties, de préférence de 1 à 15 parties d'au moins un additif choisi parmi des aminoorganosilanes, aminoorganopolysiloxanes et guanidinoorganosilanes portant par molécule à la fois :

. (i) au moins un groupe organique en $C_3$-$C_{15}$ lié par une liaison SiC à l'atome de silicium et substitué par au moins un radical amino ou un radical guanidino

. (2i) et au moins un radical alcoxy en $C_1$-$C_5$ ou un radical alcoxyalkylène-oxy en $C_3$-$C_6$.

Ces additifs et leurs modes d'utilisation sont en particulier décrits dans les brevets US-A-2 754 311, US-A-2 832 754, US-A-2 930 809, US-A-2 971 864, US-A-3 341 563, US-A-3 686 375, US-A-4 180 642.

Parmi ces additifs on peut en particulier citer les silanes de formule :

$H_2N(CH_2)_3\ Si(OC_2H_5)_3$
$H_2N(CH_2)_3\ Si(OCH_3)_3$
$H_2N(CH_2)_2\ NH(CH_2)_3\ Si(OCH_3)_3$

Des promoteurs d'adhérence particulièrement appropriés sont les silanes de formule (5) :

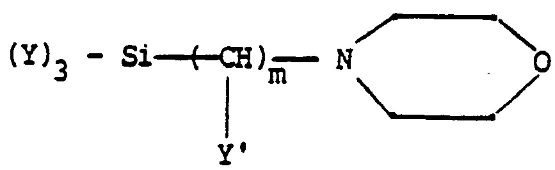

Dans laquelle Y est un radical alkyle ou alcoxy ayant inclusivement de 1 à 4 atomes de carbone, au moins deux des radicaux Y étant des radicaux alcoxy, Y' identiques ou différents sont choisis parmi l'atome d'hydrogène et un radical alkyle ayant inclusivement de 1 à 3 atomes de carbone et m est un nombre entier compris entre 3 et 10 inclusivement.

Comme silane de formule (IV) on peut citer :

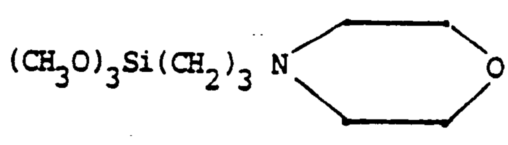

gammamorpholinopropyltyriméthoxysilane

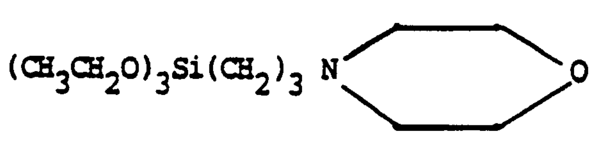

gammamorpholinopropyltriéthoxysilane.

Ces produits et leur procédé de préparation sont décrits par John L. SPEIER, I. Org. Chem., vol. 36, n° 21, 1971, page 3 120.

- EXEMPLE 1 :

On introduit dans un mélangeur tripale dans des conditions sensiblement anhydres et sous balayage d'azote :

a) une huile polydiméthylsiloxane alpha, oméga diol de formule moyenne :

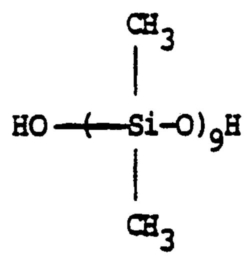

en quantité telle qu'elle corresponde à une mole de fonction silanol,

b) 3 moles de silicate de méthyle ($Si(OCH_3)_4$ et 0,25 mole de méthyléthylcétone-oxime.

La température de réaction est de 80 °C et la durée de réaction est de 1 heure.

On obtient une huile de structure moyenne :

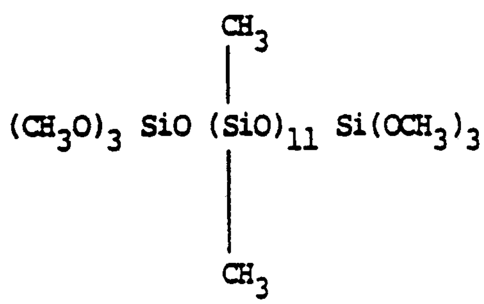

Cette structure est confirmée par RMN$^{29}$Si et fait apparaître une légère homocondensation de l'huile de départ.

- EXEMPLE COMPARATIF 1a :

On répète le mode opératoire de l'exemple 1 sauf que l'on remplace l'oxime par une même quantité molaire de pipéridine.

- EXEMPLE 2 :

Test sur la stabilité des huiles fonctionnalisées PF en présence de grandes quantités de catalyseur de fonctionnalisation oxime ou amine.

Ce test consiste à chauffer les huiles fonctionnalisées en présence du catalyseur 5 jours à 50 °C et à déterminer par analyse RMN $29_{Si}$ la teneur molaire des différents motifs siloxy de l'huile à la fin du test par rapport à une huile fonctionnalisée, témoin exempt de catalyseur.

Le rapport molaire de l'huile fonctionnalisée sur le catalyseur est de 9. Les résultats sont rassemblés dans le tableau 1 ci-après où il apparaît que le PF en présence d'oxime présente une remarquable tenue au vieillissement.

TABLEAU 1

| Huile PF | A | B | C | D |
|---|---|---|---|---|
| Témoin | 0,5 | 16 | 1,5 | 82 |
| Exemple 1 | 1 | 15,1 | 2,4 | 81,8 |
| Exemple 1a | 2,8 | 11,5 | 3,9 | 81,5 |

A : $Si(OMe)_4$
B : $- O - Si(OMe)_3$
C : $- O - Si(Me)_2(OMe)$
D : $- O - Si(Me)_2$

- EXEMPLE 3 :

Test sur la stabilité des huiles fonctionnalisées PF obtenues selon le procédé des exemples 1 ou 1a, en présence de catalyseur de fonctionnalisation et d'agent de condensation à l'étain.

Ce test consiste à chauffer les huiles fonctionnalisées 2 jours à 50 °C contenant des quantités différentes de catalyseur de fonctionnalisation et des quantités fixes d'agent de condensation en l'espèce le dilaurate de débutylétain, exprimées en rapport molaire PF par rapport au catalyseur (R) ou à l'agent de condensation (R').

Les résultats sont rassemblés dans le tableau 2 ci-après où sont donnés les pourcentages molaires des motifs siloxy déterminés par $RMN^{29}Si$.

## TABLEAU 2

| Catalyseur | R | R' | A | B | E | F | G |
|---|---|---|---|---|---|---|---|
| Oxime | 22,5 | 26 | 2 | 15 | 2,5 | - | 1 |
| Oxime | 9 | 26 | 1 | 12 | 4,5 | 1,7 | 5 |
| Oxime | 4,5 | 26 | - | 11 | 5 | 2,5 | 5,5 |
| Pipéridine | 20 | 26 | 2 | 12,8 | 4,5 | 0,5 | 7 |
| Pipéridine | 10 | 26 | - | 7 | 5,5 | 8,5 | 17 |
| Pipéridine | 7,5 | 26 | - | 6,4 | 7,5 | 7,5 | 20 |
| Néant | - | - | 1 | 15 | 1,5 | - | - |

A : $Si(OMe)_4$

B : $-O-Si(OMe)_3$

E : 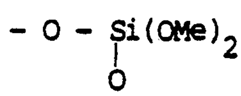

F : 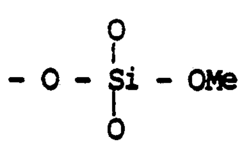

G : 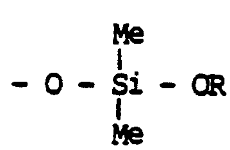 (R = H, Me)

Du tableau 2, il apparaît, qu'en présence d'étain et d'oxime, les PF sont particulièrement stables à la chaleur.

- EXEMPLES 4 A 6 :

Fonctionnalisation d'huiles diméthylpolysiloxane alpha, oméga-diol visqueuses.

On reproduit le mode opératoire de l'exemple 1 en utilisant des huiles de départ de viscosité 20 000 mPa.s à 25 °C ayant une masse moléculaire en nombre Mn de 50 000, une masse moléculaire en poids de 90 000 et un taux d'hydroxyle de 750 ppm, on utilise des polyalcoxysilanes, des durées de réaction et des températures de réaction différents. Les conditions opératoires sont rassemblées dans le tableau 3 ci-après.

Dans les trois cas, l'huile diméthylpolysiloxane alpha, oméga-diol est fonctionnalisée au bout du temps indiqué.

TABLEAU 3

| Ex | Polyalcoxysilane | Durée réaction en h. | Température réaction °C | Oxime R | Oxime R' | Polyalcoxysilane S | Polyalcoxysilane S' |
|---|---|---|---|---|---|---|---|
| 4 | $Si(OMe)_4$ | 3 | 80 | 1,3 | 0,5 | 10,5 | 7 |
| 5 | $Si(OMe)_4$ | 2 | 80 | 1,8 | 0,7 | 10,5 | 7 |
| 6 | $Si(OCH_2CH_2OCH_3)_4$ | 3 | 80 | 1,3 | 0,5 | 5,75 | 9 |

R : rapport molaire de l'oxime/SiOH,
R' : pourcentage pondéral d'oxime par rapport au poids d'huile de départ,
S : rapport molaire du polyalcoxysilane/SiOH,
S' : pourcentage pondéral de polyalcoxysilane par rapport au poids d'huile de départ.

- EXEMPLES 7 ET 8 :

On reproduit le mode opératoire de l'exemple 4 sauf que l'on utilise une huile de départ de viscosité 175 000 mPa.s à 25 °C ayant une Mn de 80 000, une Mp de 150 000 et une teneur en hydroxyle de 375 ppm.

Les conditions opératoires sont rassemblées dans le tableau 4 ci-après.

Dans les deux cas l'huile de départ est fonctionnalisée au terme du temps indiqué.

TABLEAU 4

| Ex | Polyalcoxysilane | Durée réaction en h. | Température réaction °C | Oxime R | Oxime R' | Polyalcoxysilane S | Polyalcoxysilane S' |
|---|---|---|---|---|---|---|---|
| 7 | $Si(OMe)_4$ | 2 | 80 | 2,6 | 0,5 | 21 | 7 |
| 8 | $Si(OCH_2CH_2OCH_3)_4$ | 2 | 80 | 2,6 | 0,5 | 11,5 | 9 |

- EXEMPLES 9 A 12 :

Préparation d'une composition EVF monocomposante.

Pour préparer cette composition on introduit dans des conditions anhydres le mélange réactionnel M obtenu aux exemples 7 ou 8, éventuellement dévolatilisé dans un malaxeur en incorporant les charges C et un plastifiant P à une température de 80 °C pendant deux heures.

Le plastifiant P est une huile diméthylpolysiloxane bloquée à chacune de ses deux extrémités par un motif triméthylsilyle de viscosité à 25 °C de 50 mPa.s.

Les charges C utilisées sont une silice de combustion $C_1$ de surface spécifique 150 $m^2/g$ et éventuellement du carbonate de calcium $C_2$ de diamètre particulaire moyen 5 microns.

On laisse refroidir l'empâtage obtenu et on ajoute l'agent de condensation A qui est le bis-acétylacétonate de dibutylétain $A_1$ ou le dilaurate de dibutylétain $A_2$ et une agent d'adhérence D qui est le gammamorpholinopropyltriméthoxysilane.

Le mélange est malaxé à l'abri de l'humidité pendant 5 minutes à 60 °C.

Les différentes compositions EVF des exemples 9 à 12 sont rassemblés dans le tableau 5 ci-après, en parties en poids.

TABLEAU 5

| Exemples | 9 | 10 | 11 | 12 |
|---|---|---|---|---|
| Huile OH | 100 | 100 | 100 | 100 |
| Silicate de méthyle | 7 | 7 | 7 | - |
| Silicate de méthylglycol | - | - | - | 9 |
| Oxime | 0,5 | 0,5 | 850 ppm dévolatilisation | 0,5 |
| P | - | - | - | 22,3 |
| $C_1$ | 9 | 9 | 9 | 8,4 |
| $C_2$ | - | - | - | 60,5 |
| $A_1$ | - | 0,05 | 0,05 | 0,05 |
| $A_2$ | 0,07 | - | - | |
| D | 3 | 3 | 3 | 3 |

Les compositions obtenues sont divisées en trois lots, le premier lot est conservé à température ambiante, le deuxième lot subit un vieillissement accéléré de deux jours à 100 °C et le troisième lot subit un vieillissement accéléré de trois jours à 100 °C à l'abri de l'humidité.

Sur ces trois lots on détermine les propriétés physiques ci-dessus de la façon suivante :

Une fraction des compositions est étalée à l'air ambiant (température 20 °C, humidité relative 50 %) en une couche de 2mm d'épaisseur sur une plaque de polyéthylène préalablement enduite d'un détergent commercial. Pour apprécier le temps de prise on note la durée en minutes où l'on obtient un toucher non collant de la couche.

Sur le film vieux de 2 ou 7 jours on mesure la dureté Shore A selon la norme NF-T-51 109 et sur le film vieux de 7 jours, on mesure la résistance à la rupture RR en MPa selon la norme NF-T-46 002 et l'allongement à la rupture A/R en % selon la norme NF-T-46 002.

Les résultats sont rassemblés dans le tableau 6 ci-après.

Dans le tableau 6 il apparaît que le chelate d'étain confère aux compositions EVF une meilleure stabilité au stockage par rapport au dilaurate de dibutylétain.

Par ailleurs l'étape de dévolatilisation est pratiquement sans influence sur les propriétés mécaniques et sur la stabilité au stockage des compositions EVF.

## Revendications

**1.** Procédé de préparation de diorganopolysiloxane à groupements terminaux polyalcoxy de formule :

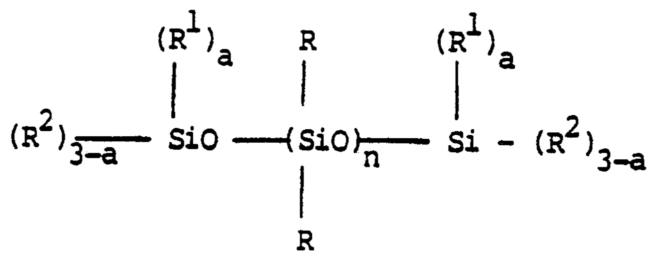

(1)

caractérisé en ce qu'on fait réagir au moins un diorganopolysiloxane de formule :

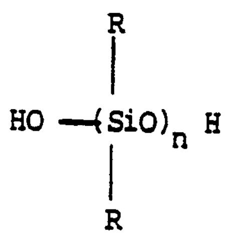

(2)

sur au moins un polyalcoxysilane de formule :

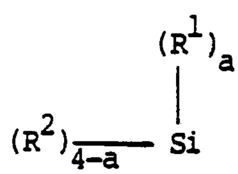

(3)

en présence d'une quantité catalytiquement efficace d'au moins un composé organique exempt de silicium et présentant une fonction oxime, formules dans lesquelles les radicaux R identiques ou différents représentent des radicaux monovalents hydrocarbonés ayant de 1 à 10 atomes de carbone, éventuellement substitués ou non par des atomes d'halogènes ou des groupes cyano ; $R^1$ représentent des radicaux monovalents hydrocarbonés en $C_1$-$C_{10}$ ; $R^2$ représentent des radicaux alcoxy ou polyalcoxy de formules : TO, TOZO, dans lesquelles T représente un radical alkyle en $C_1$-$C_4$, Z représente un radical alkylène linéaire ou ramifié en $C_2$-$C_4$, a est 0 ou 1 et n est un nombre entier ayant une valeur suffisante pour conférer au polymère de formules (1) et (2) une viscosité de 700 à 1 000 000 mPa.s à 25 °C.

**2.** Procédé selon la revendication 1, caractérisé en ce que le composé organique à fonction oxime répond à la formule :

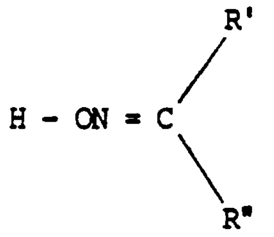

(4)

dans laquelle R′ représente un radical hydrocarboné monovalent en $C_1$-$C_{15}$ ; R″ représente un atome d'hydrogène ou un radical hydrocarboné monovalent en $C_1$-$C_{15}$ ; R′ et R″ peuvent représenter ensemble un radical carbocyclique divalent alkylène ayant de 3 à 6 atomes de carbone dans le cycle.

3. Procédé selon la revendication 1 ou 2, caractérisé en ce qu'on utilise de 0,05 à 10 moles de composé organique à fonction oxime par mole de motif silanol et de 0,1 à 20 parties en poids de polyalcoxysilane de formule (3) pour 100 parties en poids de diorganopolysiloxane de formule (2).

4. Procédé selon l'une quelconque des revendications précédentes, caractérisé en ce que le radical R, dans les formules (1) et (2), est choisi parmi les radicaux méthyle, phényle, vinyle et trifluoro-3,3,3 propyle.

5. Procédé selon l'une quelconque des revendications précédentes, caractérisé en ce que le composé organique à fonction oxime utilisé est le méthyléthylcétone-oxime.

6. Procédé selon l'une quelconque des revendications précédentes, caractérisé en ce que le polyalcoxysilane de formule (3) est choisi parmi :
$Si(OCH_3)_4$, $Si(OCH_2CH_2CH_3)_4$ et $Si(OCH_2CH_2OCH_3)_4$.

7. Procédé selon l'une quelconque des revendications précédentes, caractérisé en ce que, en outre, le diorganopolysiloxane de formule (3) issu de la réaction est chauffé sous pression réduite pour chasser les produits volatils.

8. Procédé de préparation de compositions élastomériques polysiloxane stables au stockage en absence d'humidité et réticulant en élastomère en présence d'humidité, caractérisé en ce qu'on mélange :
- 100 parties en poids du produit obtenu par la mise en oeuvre du procédé tel que défini à l'une quelconque des revendications 1 à 7,
- 0 à 20 parties d'un silane de formule (3) tel que défini à la revendication 1,
- une quantité catalytiquement efficace d'un catalyseur de condensation,
- 0 à 250 parties de charges minérales,
- 0 à 20 parties d'au moins un additif choisi parmi des aminoorganosilanes, aminoorganopolysiloxanes et guanidinoorganosilanes portant par molécule à la fois :
  . (i) au moins un groupe organique en $C_3$-$C_{15}$ lié par une liaison SiC à l'atome de silicium et substitué par au moins un radical amino ou un radical guanidino,
  . (2i) et au moins un radical alcoxy en $C_1$-$C_5$ ou un radical alcoxyalkylène-oxy en $C_3$-$C_6$.

9. Procédé selon la revendication 8, caractérisé en ce que le catalyseur de condensation est chosi parmi les chelates d'étain de valence IV hexacoordinés et le mélange d'un bis ($\beta$-dicétonate) de diorganoétain avec un dérivé organique de l'étain également de valence IV, mais exempt de fonction $\beta$-dicétonato, et possèdant au moins un atome d'étain, chaque atome d'étain portant deux radicaux organiques liés par une liaison Sn-C, les deux autres valences étant satisfaites au moyen de radicaux choisis parmi les radicaux organiques ou inorganiques liés par une liaison SnO-C, SnS-C, par des atomes d'halogènes, par des groupes hydroxy et par des atomes d'oxygène et en ce que l'additif est choisi parmi les silanes de formule (5) :

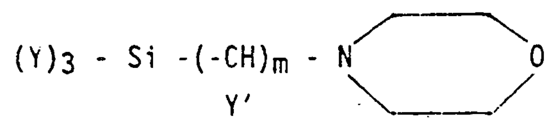

Dans laquelle Y est un radical alkyle ou alcoxy ayant inclusivement de 1 à 4 atomes de carbone, au moins deux des radicaux Y étant des radicaux alcoxy, Y' identiques ou différents sont choisis parmi l'atome d'hydrogène et un radical alkyle ayant inclusivement de 1 à 3 atomes de carbone et m est un nombre entier compris entre 3 et 10 inclusivement.

## Claims

1. Process for the preparation of diorganopolysiloxane with polyalkoxy end groups, of formula:

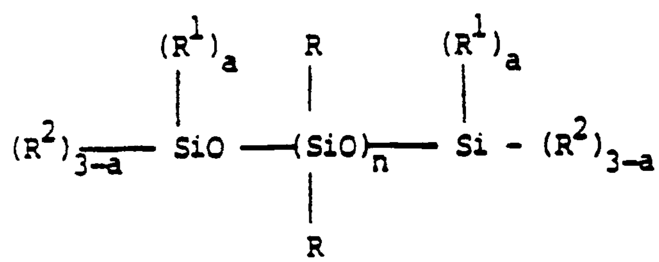

(1)

characterised in that at least one diorganopolysiloxane of formula:

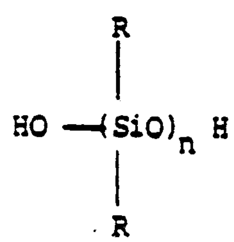

(2)

is reacted with at least one polyalkoxysilane of formula:

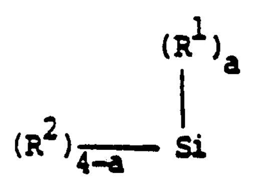

(3)

in the presence of a catalytically effective quantity of at least one silicon-free organic compound containing an oxime functional group, in which formulae the radicals R, which are identical or different, denote monovalent hydrocarbon radicals containing from 1 to 10 carbon atoms, optionally substituted or otherwise by halogen atoms or cyano groups; $R^1$ denote $C_1$-$C_{10}$ monovalent hydrocarbon radicals; $R^2$ denote alkoxy or polyalkoxy radicals of formulae: TO and TOZO, in which T denotes a $C_1$-$C_4$ alkyl radical, Z denotes a $C_2$-$C_4$ linear or branched alkylene radical, a is 0 or 1 and n is an integer whose value is sufficient to impart to the polymer of formulae (1) and (2) a viscosity of 700 to 1,000,000 mPa s at 25 °C.

2. Process according to Claim 1, characterised in that the organic compound containing an oxime functional group corresponds to the formula:

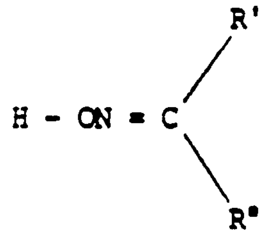

(4)

in which R' denotes a $C_1$-$C_{15}$ monovalent hydrocarbon radical; R" denotes a hydrogen atom or a $C_1$-$C_{15}$ monovalent hydrocarbon radical; R' and R" may together denote a divalent carbocyclic alkylene radical containing from 3 to 6 carbon atoms in the ring.

**3.** Process according to Claim 1 or 2, characterised in that from 0.05 to 10 moles of organic compound containing an oxime functional group are employed per mole of silanol unit, and from 0.1 to 20 parts by weight of polyalkoxysilane of formula (3) per 100 parts by weight of diorganopolysiloxane of formula (2).

**4.** Process according to any one of the preceding claims, characterised in that the radical R in formulae (1) and (2) is chosen from methyl, phenyl, vinyl and 3,3,3-trifluoropropyl radicals.

**5.** Process according to any one of the preceding claims, characterised in that the organic compound containing an oxime functional group which is employed is methyl ethyl ketone oxime.

**6.** Process according to any one of the preceding claims, characterised in that the polyalkoxysilane of formula (3) is chosen from:
$Si(OCH_3)_4$, $Si(OCH_2CH_2CH_3)_4$ and $Si(OCH_2CH_2OCH_3)_4$.

**7.** Process according to any one of the preceding claims, characterised in that, additionally, the diorganopolysiloxane of formula (3), originating from the reaction, is heated under reduced pressure to expel volatile products.

**8.** Process for the preparation of polysiloxane elastomeric compositions which are stable in storage in the absence of moisture and which crosslink to an elastomer in the presence of moisture, characterised in that the following are mixed:

- 100 parts by weight of the product obtained by using the process such as defined in any one of Claims 1 to 7,
- 0 to 20 parts of a silane of formula (3) such as defined in Claim 1,
- a catalytically effective quantity of a condensation catalyst,
- 0 to 250 parts of inorganic fillers,
- 0 to 20 parts of at least one additive chosen from aminoorganosilanes, aminoorganopolysiloxanes and guanidinoorganosilanes simultaneously carrying, per molecule:
  - (i) at least one $C_3$-$C_{15}$ organic group bonded by an SiC bond to the silicon atom and substituted by at least one amino radical or a guanidino radical, and
  - (ii) at least one $C_1$-$C_5$ alkoxy radical or a $C_3$-$C_6$ alkoxyalkyleneoxy radical.

**9.** Process according to Claim 8, characterised in that the condensation catalyst is chosen from hexacoordinated chelates of tin of valency IV and the mixture of a diorganotin bis($\beta$-diketonate) with an organic derivative of tin, also of valency IV, but free from any $\beta$-diketonato functional group and containing at least one tin atom, each tin atom carrying two organic radicals bonded by an Sn-C bond, the other two valencies being satisfied by means of radicals chosen from organic or inorganic radicals bonded by an SnO-C or SnS-C bond, by halogen atoms, by hydroxyl groups and by oxygen atoms, and in that the additive is chosen from the silanes of formula (5):

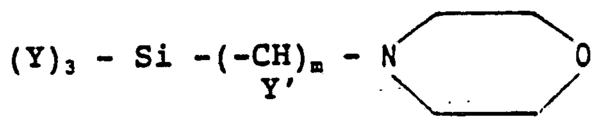

in which Y is an alkyl or alkoxy radical containing from 1 to 4 carbon atoms inclusively, at least two of the radicals Y being alkoxy radicals, Y', which are identical or different, are chosen from the hydrogen atom and an alkyl radical containing from 1 to 3 carbon atoms inclusively and m is an integer of between 3 and 10 inclusively.

**Patentansprüche**

1. Verfahren zur Herstellung von Diorganopolysiloxanen mit endständigen Polyalkoxygruppen der Formel

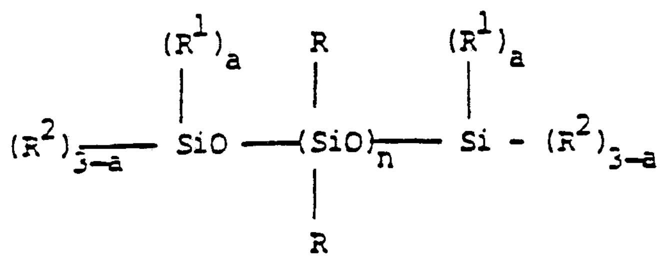

(1)

dadurch gekennzeichnet, daß man zumindest ein Diorganopolysiloxan der Formel

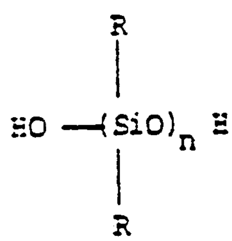

(2)

mit zumindest einem Polyalkoxysilan der Formel

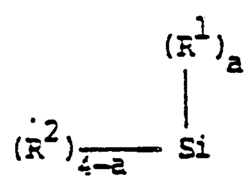

(3)

in Gegenwart einer katalytisch wirksamen Menge zumindest einer organischen, siliciumfreien Verbindung, die eine Oximfunktion aufweist, umsetzt, wobei in den Formeln die Reste R, die gleich oder verschieden sind, einwertige Kohlenwasserstoffreste mit 1 bis 10 Kohlenstoffatomen, die gegebenenfalls durch Halogenatome oder Cyanogruppen substituiert sind oder nicht substituiert sind, bedeuten; $R^1$ für einwertige $C_{1-10}$-Kohlenwasserstoffreste steht; $R^2$ Alkoxy- oder Polyalkoxyreste der Formeln TO, TOZO wiedergibt, worin T für einen $C_{1-4}$-Alkylrest steht, Z eine lineare oder verzweigte $C_{2-4}$-Alkylengruppe bedeutet, a 0 oder 1 ist und n eine ganze Zahl mit einem ausreichenden Wert ist, um dem Polymeren der Formeln (1) und (2) eine Viskosität von 700 bis 1 000 000 mPa.s bei 25°C zu verleihen.

2. Verfahren gemäß Anspruch 1, dadurch gekennzeichnet, daß die organische Verbindung mit Oximfunk-

tion der Formel

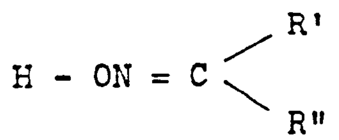

(4)

entspricht, worin R' einen einwertigen $C_{1-15}$-Kohlenwasserstoffrest bedeutet; R" für ein Wasserstoffatom oder einen einwertigen $C_{1-15}$-Kohlenwasserstoffrest steht; R' und R" gemeinsam einen zweiwertigen, carbocyclischen Alkylenrest mit 3 bis 6 Kohlenstoffatomen in dem Ring wiedergeben können.

**3.** Verfahren gemäß Anspruch 1 oder 2, dadurch gekennzeichnet, daß man 0,05 bis 10 Mol organische Verbindung mit Oximfunktion je Mol Silanolgruppierung und 0,1 bis 20 Gew.Teile Polyalkoxysilan der Formel (3) je 100 Gew.-Teile Diorganopolysiloxan der Formel (2) verwendet.

**4.** Verfahren gemäß einem der vorhergehenden Ansprüche, dadurch gekennzeichnet, daß der Rest R in den Formeln (1) und (2) unter den Methyl-, Phenyl-, Vinyl- und 3,3,3-Trifluorpropylresten ausgewählt ist.

**5.** Verfahren gemäß einem der vorhergehenden Ansprüche, dadurch gekennzeichnet, daß die verwendete organische Verbindung mit Oximfunktion Methylethylketonoxim ist.

**6.** Verfahren gemäß einem der vorhergehenden Ansprüche, dadurch gekennzeichnet, daß das Polyalkoxysilan der Formel (3) ausgewählt ist unter $Si(OCH_3)_4$, $Si(OCH_2CH_2CH_3)_4$ und $Si(OCH_2CH_2OCH_3)_4$.

**7.** Verfahren gemäß einem der vorhergehenden Ansprüche, dadurch gekennzeichnet, daß außerdem das aus der Reaktion hervorgehende Diorganopolysiloxan der Formel (3) unter vermindertem Drück erhitzt wird, um die flüchtigen Bestandteile zu vertreiben.

**8.** Verfahren zur Herstellung von Polysiloxan-Elastomerzusammensetzungen, die in Abwesenheit von Feuchtigkeit lagerungsstabil sind und in Gegenwart von Feuchtigkeit zu Elastomeren vernetzen, dadurch gekennzeichnet, daß man mischt:

- 100 Gew.Teile eines Produkts, das nach Durchführung des Verfahrens gemäß einem der Ansprüche 1 bis 7 erhalten wurde,
- 0 bis 20 Teile eines Silans der Formel (3), wie in Anspruch 1 definiert,
- eine katalytisch wirksame Menge eines Kondensationskatalysators,
- 0 bis 250 Teile mineralische Füllstoffe,
- 0 bis 20 Teile zumindest eines Additivs, ausgewählt unter den Aminoorganosilanen, Aminoorganopolysiloxanen und Guanidinoorganosilanen, die gleichzeitig je Molekül enthalten:
  ( i) zumindest eine organische $C_{3-15}$-Gruppe, die durch eine SiC-Bindung an das Siliciumatom gebunden ist und durch zumindest einen Aminorest oder einen Guanidinorest substituiert ist,
  ( 2i) und zumindest einen $C_{1-5}$-Alkoxyrest oder einen $C_{3-6}$-Alkoxyalkylenoxyrest.

**9.** Verfahren gemäß Anspruch 8, dadurch gekennzeichnet, daß der Kondensationskatalysator ausgewählt wird unter den hexakoordinierten Zinnchelaten mit der Wertigkeit IV und dem Gemisch eines Diorganozinn-bis-($\beta$-diketonats) mit einem organischen Derivat des ebenfalls vierwertigen Zinns, jedoch ohne $\beta$-Diketonato-Funktion, und mit zumindest einem Zinnatom, wobei jedes Zinnatom zwei organische, über eine Sn-C-Bindung gebundene Reste aufweist und die beiden anderen Valenzen abgesättigt sind durch Reste, ausgewählt unter den organischen oder anorganischen Resten, welche durch eine SnO-C-, SnS-C-Bindung, durch Halogenatome, durch Hydroxygruppen und durch Sauerstoffatome gebunden sind, und daß das Additiv unter den Silanen der Formel (5)

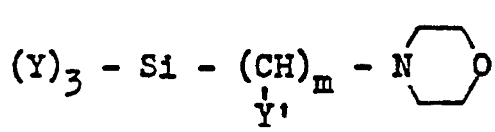

ausgewählt wird, worin Y für einen Alkyl- oder Alkoxyrest mit einschließlich 1 bis 4 Kohlenstoffatomen steht, wobei zumindest zwei der Reste Y Alkoxyreste sind, Y', die gleich oder verschieden sind, unter den Wasserstoffatomen und einem Alkylrest mit einschließlich 1 bis 3 Kohlenstoffatomen ausgewählt sind und m eine ganze Zahl zwischen 3 und 10 einschließlich ist.